# FASCICULE DE BREVET EUROPEEN

(11) **EP 1 031 229 B1**
(45) Date de publication et mention de la délivrance du brevet: **25.05.2005**
(21) Numéro de dépôt: 98954511.6
(22) Date de dépôt: 04.11.1998
(51) Int. Cl.: H04M 1/274

(54) **PROCEDE POUR EMETTRE DES SIGNAUX ACOUSTIQUES A PARTIR D'UNE CARTE A MEMOIRE OU A PUCE, ET CARTE POUR LA MISE EN OEUVRE DU PROCEDE**
VERFAHREN ZUR ERZEUGUNG VON AKUSTISCHEN SIGNALEN AUS EINER SPEICHERKARTE ODER CHIPKARTE UND KARTE ZUR DURCHFÜHRUNG DES VERFAHRENS
METHOD FOR TRANSMITTING ACOUSTIC SIGNALS FROM A MEMORY OR CHIP CARD, AND CARD FOR IMPLEMENTING SAID METHOD

(30) Priorité: 05.11.1997 FR 9713902
(43) Date de publication de la demande: 30.08.2000
(73) Titulaire: Audiosmartcard International, 92100 Boulogne Billancourt (FR)
(72) Inventeur: COLNOT, Cédric, F-94200 Ivry-sur-Seine (FR)
(74) Mandataire: Doireau, Marc
(86) Numéro de dépôt international: PCT/FR1998/002354
(87) Numéro de publication internationale: WO 1999/023804

(56) Documents cités:
- EP-A- 0 618 711
- WO-A-97/16049
- GB-A- 2 272 130
- US-A- 5 181 744

## Description

L'invention concerne un procédé pour émettre des signaux acoustiques à partir d'une carte à mémoire ou à puce.

Il est maintenant courant d'utiliser une carte à mémoire ou à puce comme clé d'accès à un service ou comme moyen de transfert de données. Lorsque cet accès ou ce transfert se fait à distance, il est également connu d'utiliser des cartes dites vocales où les données sont transmises sur une ligne téléphonique par couplage acoustique avec un téléphone.

Une carte vocale est notamment décrite dans le document EP-A-0 664 633 où les données sont converties en signaux acoustiques au moyen d'un transducteur piézo-électrique logé dans la carte, et ces signaux sont émis sous forme vocale par le transducteur et transmis sur la ligne téléphonique au travers du microphone du téléphone. Par émission de signaux sous forme vocale, il faut entendre une émission à toute fréquence comprise dans la bande passante du réseau téléphonique.

Concrètement, l'usager tient d'une main le combiné du téléphone et de l'autre sa carte qu'il rapproche du microphone du combiné, puis active, par l'intermédiaire d'une touche présente sur la carte, le processus de transmission sous forme vocale des données enregistrées dans la carte.

La mise en oeuvre d'un tel mode de transmission n'est pas sans poser des problèmes, notamment au niveau de la fabrication de la carte. En effet, le transducteur piézo-électrique doit être logé dans une cavité en ménageant un espace suffisant pour délimiter une chambre acoustique. Du fait de la faible épaisseur de la carte de 0,76 mm selon les normes ISO, les dimensions de la cavité doivent être néanmoins suffisantes pour obtenir de bonnes performances d'un point de vue acoustique, mais il en résulte une fragilisation de la carte sur le plan mécanique. Il faut donc arriver à un compromis qui est d'autant plus difficile à satisfaire que l'épaisseur de la carte diminue: En outre, la chambre acoustique du transducteur piézo-électrique doit communiquer avec l'extérieur par l'intermédiaire de trous percés dans la carte. Il en résulte une carte qui est sensible aux contraintes de l'environnement extérieur, en particulier à l'humidité qui peut entraîner un dysfonctionnement du transducteur piézo-électrique.

Dans le document GB-A-2 272 130, on décrit un dispositif émetteur de signaux acoustiques qui comprend notamment un cadre délimitant une ouverture centrale et qui reçoit une membrane, un élément piézo-électrique 11 relié à la membrane et fixé sur une plaque métallique, un interrupteur d'activation, un module électronique et une source d'alimentation. Un tel dispositif ne peut être utilisé au format d'une carte de crédit.

Dans le document WO 97/16049, on décrit un procédé de fabrication d'un transducteur sonore intégré dans une carte à production de signaux acoustiques, ce transducteur étant constitué à partir d'un ruban en polyvinylidène fluoré (PVDF) qui est intégré dans la carte.

A partir d'un examen approfondi de cet état de la technique et dans le but de pallier notamment les problèmes posés à la fabrication pour respecter la contrainte d'épaisseur imposée à ce type de carte, la Demanderesse a été amenée à concevoir un nouveau mode d'émission qui fait l'objet de la présente Demande.

A cet effet, l'invention propose une carte pour émettre des signaux acoustiques, cette carte incorporant au moins un micromodule électronique de commande et une mémoire dans laquelle sont enregistrés des données binaires, et un dispositif d'excitation connecté au micromodule pour convertir les données binaires en signaux acoustiques et une membrane vibrante reliée au dispositif d'excitation pour émettre lesdits signaux acoustiques, caractérisée en ce que la membrane vibrante est constituée par la carte elle-même.

Un tel procédé d'émission de signaux acoustiques présente notamment l'avantage de faciliter les opérations de fabrication de la carte. En effet, il n'est plus nécessaire de prévoir une chambre acoustique dans la cavité qui reçoit le dispositif d'excitation. Il en résulte une fabrication simplifiée avec des performances accrues tant sur le plan acoustique que sur le plan mécanique.

Ainsi et pour autant que cela puisse paraître paradoxal, une faible épaisseur qui est une contrainte pour la fabrication d'une carte vocale selon l'Art antérieur, devient un avantage pour la fabrication d'une carte mettant en oeuvre le procédé selon l'invention. Autrement dit, plus cette épaisseur diminue et plus le procédé selon l'invention est performant.

En outre, comme la carte n'est plus percée des trous qui étaient aùparavant nécessaires pour assurer la transmission de l'onde acoustique, le procédé d'émission selon l'invention peut être avantageusement mis en oeuvre avec une carte qui est rendue étanche.

D'une manière générale, une carte vocale est activée à partir d'une touche mécanique intégrée à la carte.

Selon une autre caractéristique de l'invention, le procédé d'émission est activé à partir d'une touche tactile, ce qui permet de faciliter l'intégration d'une telle touche dans une carte de faible épaisseur.

A titre d'exemple, le dispositif d'excitation de la carte formant membrane est un dispositif qui produit des vibrations mécaniques, tel qu'un élément piézo-électrique du type céramique, et qui est rendu solidaire de la carte en étant noyé dans celle-ci, par exemple. Dans ce cas, l'élément piézo-électrique et la carte forment un transducteur électro-acoustique, l'élément piézo-électrique étant excité à partir de signaux électriques délivrés à partir des données binaires enregistrées dans la carte, par exemple.

De manière préférentielle, le dispositif d'excitation de la carte formant membrane est placé dans un angle de la carte tout en permettant à celle-ci de vibrer sur sensiblement toute sa surface.

Un tel positionnement présente notamment l'avantage d'éloigner le dispositif d'excitation des axes principaux de torsion et de flexion de la carte, ce qui permet à la carte de satisfaire également aux normes ISO dans le domaine des contraintes mécaniques que la carte doit être en mesure de supporter.

Une carte selon l'invention peut être fabriquée selon des procédés classiques de laminage ou d'injection, par exemple.

Pour activer une telle carte, l'usager la maintient entre ses doigts et active le processus d'émission au moyen d'une touche de la carte comme pour une carte vocale classique. Cependant, il est important de noter que le simple fait pour l'usager de maintenir la carte entre ses doigts, permet d'amplifier le mode de vibration de la carte.

Selon une autre caractéristique de la carte selon l'invention, la touche d'activation est constituée par une touche tactile qui présente l'avantage, par rapport à une touche mécanique, de ne comprendre aucun élément mobile.

Une telle carte peut être notamment utilisée, comme la carte du document cité en préambule, pour émettre et transmettre sous forme vocale des données binaires sur une ligne téléphonique par couplage acoustique avec un téléphone. Dans ce cas, la carte selon l'invention présente l'avantage de ne pas nécessiter un positionnement précis par rapport au microphone du téléphone.

D'autres avantages, caractéristiques et détails de l'invention ressortiront du complément de description qui va suivre en référence à des dessins annexés, donnés uniquement à titre d'exemple et dans lesquels :
- la figure 1 est une vue schématique d'une carte mettant en oeuvre le procédé d'émission selon l'invention,
- la figure 2 est une vue en coupe partielle selon la ligne II-II de la figure 1, et
- la figure 3 est une vue de dessus du micromodule électronique de commande intégré à la carte.

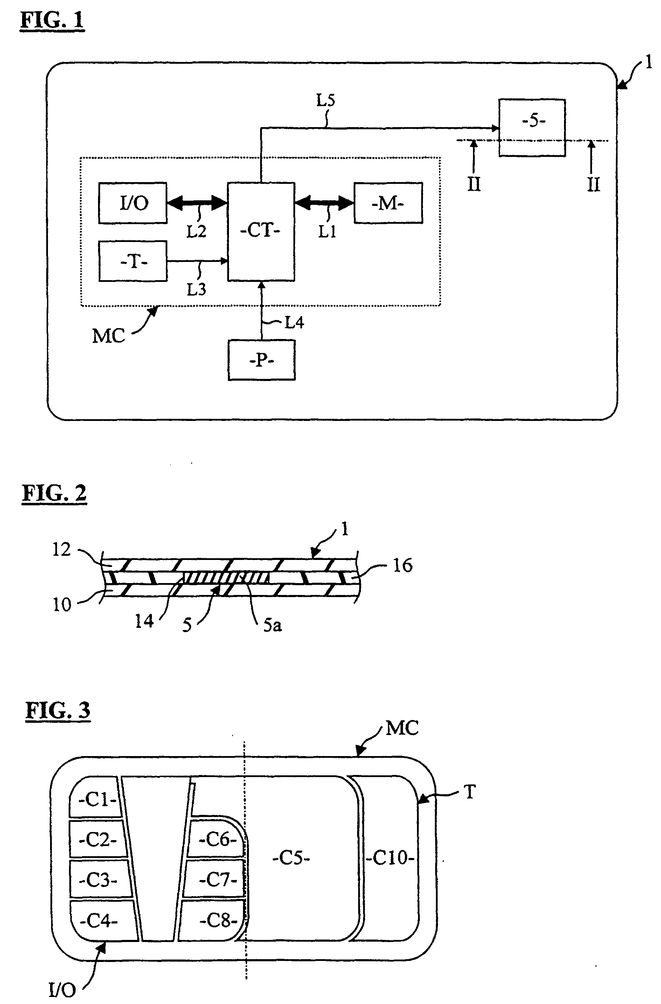

La carte 1 à mémoire ou à puce illustrée sur la figure 1 incorpore au moins un micromodule électronique de commande MC, une pile P et un dispositif d'excitation 5 destiné à produire des vibrations mécaniques.

Le micromodule MC incorpore notamment une mémoire M du type EEPROM, des circuits de traitement CT, une interface I/O d'entrée/sortie à contacts et une touche d'activation T pour mettre en vibration le dispositif d'excitation 5. Deux liaisons électriques bidirectionnelles L1 et L2 relient respectivement la mémoire M et l'interface I/O. aux circuits de traitement CT, alors qu'une liaison électrique unidirectionnelle L3 relie la touche T aux circuits de traitement CT.

La pile P alimente les circuits de traitement CT par une liaison électrique L4.

Le dispositif d'excitation 5 est destiné à produire des vibrations mécaniques qui vont être directement transmises à la carte 1 pour la faire vibrer comme une membrane. Le dispositif d'excitation 5 est relié par une liaison électrique L5 aux circuits de traitement CT du micromodule CT.

Les circuits de traitement CT ont pour fonction de convertir les informations binaires stockées dans la mémoire M en signaux acoustiques. A titre d'exemple, les informations binaires subissent une modulation du type FSK ("Frequency Shift Keying") ou modulation par décalage de fréquence. Cette modulation consiste à générer une onde porteuse avec une fréquence différente suivant l'état logique du bit à transmettre.

Une telle carte 1 peut être fabriquée par un procédé de laminage classique qui consiste à réaliser un "sandwich" de plusieurs feuilles en matière plastique, prédécoupées et collées ensemble pour emprisonner les différents circuits de la carte 1.

A titre d'exemple et en référence à la figure 2, le dispositif d'excitation 5 est constitué par un élément piézo-électrique 5a du type céramique, qui est pris en "sandwich" entre deux feuilles 10 et 12 en matière plastique collées l'une sur l'autre. Concrètement; l'élément piézo-électrique 5a vient se loger dans une ouverture 14 ménagée dans une feuille intermédiaire 16 en matière plastique. Cette ouverture 14 traverse de part en part la feuille 16 et à des dimensions adaptées à celles de l'élément piézo-électrique 5a. Une fois les feuilles 10,12 et 16 assemblées entre elles par collage, les deux faces de l'élément piézo-électrique 5a sont respectivement au contact des deux feuilles 10 et 12, de sorte que l'élément piézo-électrique 5a est ainsi rendu mécaniquement solidaire de la carte 1.

Avantageusement, le dispositif d'excitation 5 est positionné dans un angle de la carte 1 pour les raisons explicitées précédemment.

Selon un mode préférentiel de réalisation de la carte 1, la touche d'activation T est constituée par une touche tactile. Plus précisément, en se reportant à la figure 3, l'interface I/O d'entrée/sortie est constituée par les huit contacts électriques, référencés C1-C8 selon les normes ISO, qui sont en affleurement sur une face de la carte 1 et sélectivement reliés au micromodule MC. La touche tactile T est constituée par un contact électrique supplémentaire C10 qui est en affleurement sur la même face de la carte 1 et positionné à proximité immédiate de l'interface I/O. Plus précisément, le contact électrique C10 est situé à proximité du contact électrique C5 qui s'étend sur une surface plus importante que les autres contacts électriques. Le contact électrique C10 est relié au micromodule MC de telle manière qu'il suffit d'appliquer un doigt, généralement le pouce, simultanément sur le contact C5 de l'interface I/O et le contact C10 de la touche T pour établir une liaison électrique qui active le micromodule MC.

A cette touche T, on peut avantageusement associer un circuit de validation de l'activation de la carte pour éviter un mode de fonctionnement intempestif dès qu'un doigt vient au contact de la touche, aussi bien pendant les opérations de fabrication qu'au cours des manipulations de la carte par l'usager. Concrètement, un tel circuit de validation est incorporé dans le micromodule MC et a pour fonction de détecter une action volontaire de l'usager sur la touche T avant d'activer le fonctionnement de la carte.

Concrètement, considérons une application où la carte 1 est utilisée comme une carte vocale classique pour émettre et transmettre des signaux acoustiques sur une ligne téléphonique par couplage acoustique avec le microphone d'un téléphone. Les signaux acoustiques émis correspondent par exemple à une séquence de données binaires préenregistrées dans la mémoire de la carte et qui servent à identifier l'usager.

L'usager saisit sa carte 1 en la maintenant entre ses doigts respectivement appliqués sur les deux faces principales de la carte 1, l'un de ses doigts venant établir un contact électrique entre le contact C5 de l'interface d'entrée-sortie I/O et le contact C10 de la touche T, une fois la carte 1 positionnée dans l'espace à proximité du microphone du téléphone.

Le processus d'émission est alors activé. Autrement dit, les circuits de traitement CT convertissent la séquence de données binaires prélevées de la mémoire M en une séquence de signaux acoustiques qui sont transmis au dispositif d'excitation 5. Ces signaux acoustiques vont mettre en vibration le dispositif d'excitation 5, et les vibrations résultantes vont être directement transmises à la carte 1 qui va se mettre à vibrer comme une membrane classique. Le mode de vibration de la carte 1 est d'ailleurs d'autant meilleur que l'usager maintient la carte entre ses doigts. La carte 1 se transforme ainsi en une source émettrice d'une onde acoustique représentative de la séquence des données binaires prélevées dans la mémoire M de la carte 1. Cette onde acoustique est ensuite transmise sur la ligne téléphonique par l'intermédiaire du microphone du téléphone.

Un serveur branché sur le réseau téléphonique reçoit ainsi une séquence de données binaires, et peut alors déclencher un protocole d'identification unidirectionnel ou bidirectionnel pour identifier la séquence reçue et permettre à l'usager d'accéder à un service délivré par le serveur.

Bien évidement, une telle carte vocale peut être utilisée comme une carte à mémoire ou à puce classique en étant introduite dans un lecteur qui communique avec elle par l'interface I/O d'entrée/sortie.

## Revendications

1. Carte pour émettre des signaux acoustiques, cette carte (1) incorporant au moins un micromodule électronique de commande (MC) comprenant notamment des circuits de traitement (CT) et une mémoire (M) dans laquelle sont enregistrées des données binaires, et un dispositif d'excitation (5) connecté au micromodule (MC) pour convertir les données binaires en signaux acoustiques et une membrane vibrante reliée au dispositif d'excitation (5) pour émettre lesdits signaux acoustiques, **caractérisée en ce que** la membrane vibrante est constituée par la carte (1) elle-même.

2. Carte selon la revendication 1, **caractérisée en ce que** le dispositif d'excitation (5) est constitué par un élément piézo-électrique (5a) du type céramique, qui produit des vibrations mécaniques, et **en ce que** ledit élément piézo-électrique (5a) est rendu solidaire de la carte (1).

3. Carte selon la revendication 2, **caractérisée en ce que** l'élément piézo-électrique (5a) est pris en "sandwich" entre deux feuilles (10, 12) en matière plastique, et **en ce qu'**il est logé dans une ouverture (14) ménagée dans une feuille intermédiaire (16) en matière plastique.

4. Carte selon l'une des revendications 1 à 3, **caractérisée en ce qu'**une touche d'activation (T) est située sur la carte (1) et reliée au micromodule (MC) pour activer le procédé de transmission, ladite touche (T) étant une touche tactile.

5. Carte selon la revendication 4, **caractérisée en ce que** la touche tactile (T) est constituée par un contact électrique (C10) qui est en affleurement sur une face de la carte (1) avec les contacts électriques (C1-C8) de l'interface (I/O) d'entrée/sortie, les contacts électriques (C1-C8, C10) étant sélectivement reliés au micromodule de commande (MC), et **en ce que** le contact électrique (C10) est positionné à proximité de l'un (C5) des contacts électriques (C1-C8) de manière à ce qu'un doigt de la main puisse venir s'appliquer simultanément sur les deux contacts électriques (C5, C10) pour activer le module de commande (MC).

6. Carte selon l'une des revendications précédentes, **caractérisée en ce que** le dispositif d'excitation (5) est positionné dans un angle de la carte (1).

## Patentansprüche

1. Karte zum Ausgeben von akustischen Signalen, wobei diese Karte (1) wenigstens ein Steuerelektronik-Mikromodul (MC) einschließt, welches insbesondere Verarbeitungsschaltkreise (CT) und einen Speicher (M), in welchem binäre Daten gespeichert sind, und eine Treibervorrichtung (5), welche mit dem Mikromodul (MC) verbunden ist, um die binären Daten in akustische Signale umzuwandeln, und eine Vibrationsmembran, welche mit der Treibervorrichtung (5) verbunden ist, um die akustischen Signale auszugeben, umfasst, **dadurch gekennzeichnet, dass** die Vibrationsmembran durch die Karte (1) selbst gebildet ist.

2. Karte nach Anspruch 1, **dadurch gekennzeichnet, dass** die Treibervorrichtung (5) durch ein piezoelektrisches Element (5a) des Keramiktyps gebildet ist, welches mechanische Vibrationen erzeugt, und dass das piezoelektrische Élement (5a) fest mit der Karte (1) verbunden ist.

3. Karte nach Anspruch 2, **dadurch gekennzeichnet, dass** das piezoelektrische Element (5a) "Sandwich"-artig zwischen zwei Folien (10, 12) aus Kunststoffmaterial eingeschlossen ist und dass es in einer Öffnung (14) untergebracht ist, welche in einer Zwischenfolie (16) aus Kunststoffmaterial herbeigeführt ist.

4. Karte nach einem der Ansprüche 1-3, **dadurch gekennzeichnet, dass** sich eine Aktivierungstaste (T) auf der Karte (1) befindet und mit dem Mikromodul (MC) verbunden ist, um den Übertragungsvorgang zu aktivieren, wobei die Taste (T) eine Berührungstaste ist.

5. Karte nach Anspruch 4, **dadurch gekennzeichnet, dass** die Berührungstaste (T) durch einen elektrischen Kontakt (C10) gebildet ist, welcher auf einer Seite der Karte (1) mit den elektrischen Kontakten (C1-C8) der Eingabe/Ausgabe-Schnittstelle (I/O) eingelassen ist, wobei die elektrischen Kontakte (C1-C8, C10) selektiv mit dem Steuer-Mikromodul (MC) verbunden sind, und dass der elektrische Kontakt (C10) derart in der Nähe eines (C5) der elektrischen Kontakte (C1-C8) positioniert ist, dass ein Finger der Hand gleichzeitig auf die zwei elektrischen Kontakte (C5, C10) aufgebracht werden kann, um das Steuer-Modul (MC) zu aktivieren.

6. Karte nach einem der vorhergehenden Ansprüche, **dadurch gekennzeichnet, dass** die Treibervorrichtung (5) in einer Ecke der Karte (1) positioniert ist.

## Claims

1. A card for emitting sound signals, the card (1) incorporating at least one controlling electronic micromodule (MC) comprising in particular processor circuits (CT) and a memory (M) in which binary data is stored, and an excitation device (5) connected to the micromodule (MC) to convert the binary data into sound signals, and a vibrating membrane connected to the excitation device (5) to emit said sound signals, the card being **characterized in that** the vibrating membrane is constituted by the card (1) itself.

2. A card according to claim 1, **characterized in that** the excitation device (5) is constituted by a piezoelectric element (5a) of the ceramic type which produces mechanical vibration, and **in that** said piezoelectric element (5a) is secured to the card (1).

3. A card according to claim 2, **characterized in that** the piezoelectric element (5a) is sandwiched between two sheets (10, 12) of plastics material, and **in that** it is received in an opening (14) formed in an intermediate sheet (16) of plastics material.

4. A card according to any one of claims 1 to 3, **characterized in that** an activation key (T) is situated on the card (1) and is connected to the micromodule (MC) to activate the transmission process, said key (T) being a touch-sensitive key.

5. A card according to claim 4, **characterized in that** the touch-sensitive key (T) is constituted by an electrical contact (C10) which is flush with a face of the card (1) that also has electrical contacts (C1-C8) of the input/output interface (I/O), the electrical contacts (C1-C8, C10) being selectively connected to the controlling micromodule (MC), and **in that** the electrical contact (C10) is positioned close to one (C5) of the electrical contacts (C1-C8) in such a manner as to enable a finger of the hand to press simultaneously against both electrical contacts (C5, C10) so as to activate the control module (MC).

6. A card according to any preceding claim, **characterized in that** the excitation device (5) is positioned in a corner of the card (1).
